# EUROPEAN PATENT SPECIFICATION

(11) **EP 3 346 300 B1**
(45) Date of publication and mention of the grant of the patent: **31.08.2022**
(21) Application number: 17210417.6
(22) Date of filing: 22.12.2017
(51) Int. Cl.: G01V 5/00

(54) **MOVABLE ARTICLE INSPECTION SYSTEM**
BEWEGLICHES ARTIKELUNTERSUCHUNGSSYSTEM
SYSTÈME D'INSPECTION D'UN ARTICLE MOBILE

(30) Priority: 29.12.2016 CN 201611239983
(43) Date of publication of application: 11.07.2018
(73) Proprietor: Nuctech Company Limited, TongFang Building, Shuangqinglu, Haidian District Beijing 100084 (CN)
(72) Inventor: SUN, Shangmin, Beijing, Beijing 100084 (CN); SHI, Junping, Beijing, Beijing 100084 (CN); GAO, Kejin, Beijing, Beijing 100084 (CN)
(74) Representative: Held, Stephan

(56) References cited:
- DE-U1-202009 015 830
- US-A- 5 638 420
- US-A1- 2004 258 198
- US-A1- 2012 257 717
- US-A1- 2015 204 999

## Description

### RELATED APPLICATION

This disclosure claims the priority of the Chinese patent application No. 201611239983.X submitted to the Chinese Patent Office on DEC.29, 2016, the title of which is "MOVABLE ARTICLE INSPECTION SYSTEM".

### FIELD OF THE INVENTION

The present disclosure relates to the field of safety detection, and especially relates to a movable article inspection system.

### BACKGROUND OF THE INVENTION

Existing mobile article inspection systems mainly include two types: vehicle-mounted article inspection systems and mobile gantry inspection systems. A vehicle-mounted article inspection system uses a universal truck chassis for load bearing and utilizes the movement of the chassis to carry out scanning inspection of articles to realize mobility of the inspection system. A mobile gantry article inspection system uses a track device which drives a mobile gantry equipped with an article inspection system to move on the tracks to realize scanning inspection of an article between the straight tracks.

These two types of mobile article inspection system both have certain limitations. Wherein, the vehicle-mounted article inspection system is confined by chassis emission, left rudder/right rudder and other related road laws and regulations. The mobile gantry article inspection system requires construction of tracks on the inspection site, therefore are subject to certain site limitations. Since pre-investment for civil construction is required, the cost is relatively high. On the other hand, this kind of article inspection system cannot realize long-distance transition, so it is less applicable.

There have been several patents issued that cover variations of the movable inspection system. For example, US 2004/258198 A1 discloses a relocatable X-ray imaging system for inspecting the contents of vehicles and containers that uses a substantially arch-shaped collapsible frame having an X-ray source and detectors disposed thereon. The collapsible X-ray frame may be movable relative to a stationary vehicle or container in self-propelled, self-guided mode via tires, and/or guided along one or more rails or tracks.

Likewise, US 5 638 420 A presents a straddle inspection system, including a movable frame which can straddle the container or object being inspected. Here again, a penetrating radiation source and a linear detector array is mounted on the two sides of the straddle. This system further includes a remote control means for guiding the inverted U-shape frame.

US 2015/204999 A1 discloses another variation of the inspection system for container that comprises a radiation source, a detector, and a movable vehicle body of the inspection system. The radiation source and the detector can be moved along the height direction of the frame by driving device, and can be deflected around a gyration center in a small angle by deflection device. The system can therefore inspect in batches the container in the wharf or goods yard.

DE 20 2009 015830 U1 discloses a modular traversing portal for detecting radiations from containers, consisting of support frame, supporting structure, driving carrier with steerable wheels and detectors. The portal is further arranged with a driving system with power source, steering and braking devices for the need of the detectors.

### SUMMARY OF THE INVENTION

the present disclosure is to propose a movable article inspection system, which is operated and used in common sites and is capable of long-distance transition.

In one aspect, the present disclosure provides a movable article inspection system, according to claim 1, comprising:
a portal frame, comprising:
   a transverse beam located at a top of the portal frame; and
   vertical beams located on opposite sides of the transverse beam and connected with the transverse beam;
a wheeled travelling device provided at lower ends of the vertical beams, for moving the portal frame; and
a ray-based inspection assembly for carrying out an inspection of an article passing through the portal frame.

The inspection assembly comprises: a radiation source, for emitting rays to form a fan-shaped scanning surface so as to scan the article passing through the portal frame; and
a detection unit mounted on the portal frame, for detecting the rays reflected or transmitted on the article.

The wheeled travelling device comprises a wheel carrier, wheels and a travelling drive mechanism, the wheel carrier is connected with the lower end of the vertical beams of the portal frame, the wheel carrier is provided with a downwardly protruding frame structure, and the radiation source is mounted within the downwardly protruding frame structure.

In certain implementations, the travelling drive mechanism is configured to rotate the wheels; and

wherein the wheels and the travelling drive mechanism are mounted on the wheel carrier, and the wheels are rotatable and steerable with respect to the wheel carrier.

In certain implementations, the wheel carrier is provided with at least two of the wheels.

In certain implementations, the travelling drive mechanism comprises a plurality of motors, each of which for driving one of the wheels correspondingly; or each of the motors for rotating one or more of the wheels through a transmission mechanism.

In certain implementations, the wheeled travelling device comprises a generator for supplying power to the inspection assembly and the wheeled travelling device.

In certain implementations, further comprising a remote controller and a remote control command transmission assembly, the remote controller for communicating with the remote control command transmission assembly so as to remotely control the wheeled travelling device or/and the inspection assembly.

In certain implementations, a braking mechanism is provided on the wheeled travelling device, for holding the movable article inspection system at a preset inspection position.

In certain implementations, further comprising a route correction mechanism for enabling the wheeled travelling device to travel along a preset track.

Embodiments of the disclosure may include one or more of the following advantages. With the movement of the wheeled travelling device, the position adjustment and the transition of the inspection assembly are realized. On one hand, there are fewer site restrictions and basically no civil construction for the inspection site, which reduces the pre-construction investment. On the other hand, the wheeled travelling device can achieve a long-distance transition and therefore has better applicability.

### BRIEF DESCRIPTION OF THE ACCOMPANYING DRAWINGS

The drawings illustrated here are for providing further understanding of the present disclosure and thus constitute part of the present application. The exemplary embodiments of the present disclosure and descriptions thereof are for interpreting the present disclosure, not constituting improper limitations of the present disclosure. In the drawings:
FIG. 1 is a schematic view of the structure of an embodiment of the movable article inspection system of the present disclosure.
FIG. 2 is a schematic view of the structure of an embodiment of the movable article inspection system of the present disclosure from another angle of view.
FIG. 3 is a schematic view of the structure of another embodiment of the movable article inspection system of the present disclosure.

### DETAILED DESCRIPTION OF THE PREFERRED EMBODIMENTS

Thereinafter, the technical solution of the present disclosure will be further described in detail through drawings and embodiments.

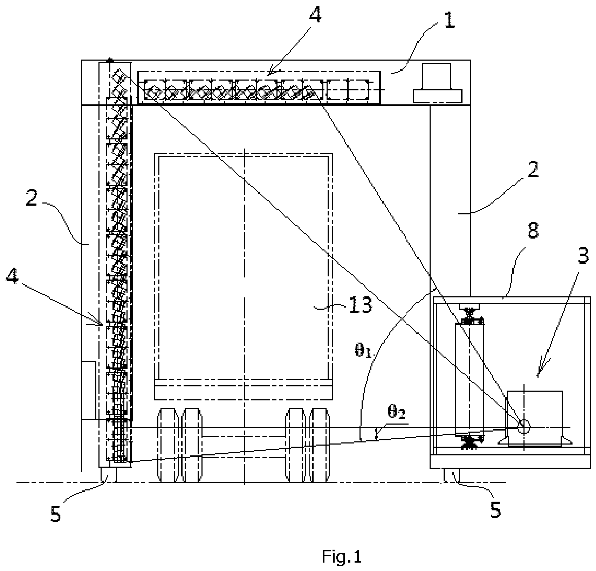

FIG. 1 is a schematic view of the structure of an embodiment of the movable article inspection system of the present disclosure. In this embodiment, the movable article inspection system comprises: a portal frame, a wheeled travelling device and a ray-based inspection assembly for carrying out an inspection of an article 13 passing through the portal frame. The portal frame comprises a transverse beam 1 located at atop of the portal frame and vertical beams 2 located on opposite sides of the transverse beam 1 and connected with the transverse beam 1. The wheeled travelling device is provided at the lower end of the vertical beams 2.The portal frame realize position adjustment and transition of the inspection assembly by movement of the wheeled travelling device.

According to the embodiment, the position adjustment and the transition of the inspection assembly are realized with the movement of the wheeled travelling device. On one hand, there are fewer site restrictions and basically no civil construction for the inspection site, which reduces the pre-construction investment. On the other hand, the wheeled travelling device can achieve a long-distance transition and therefore has better applicability.

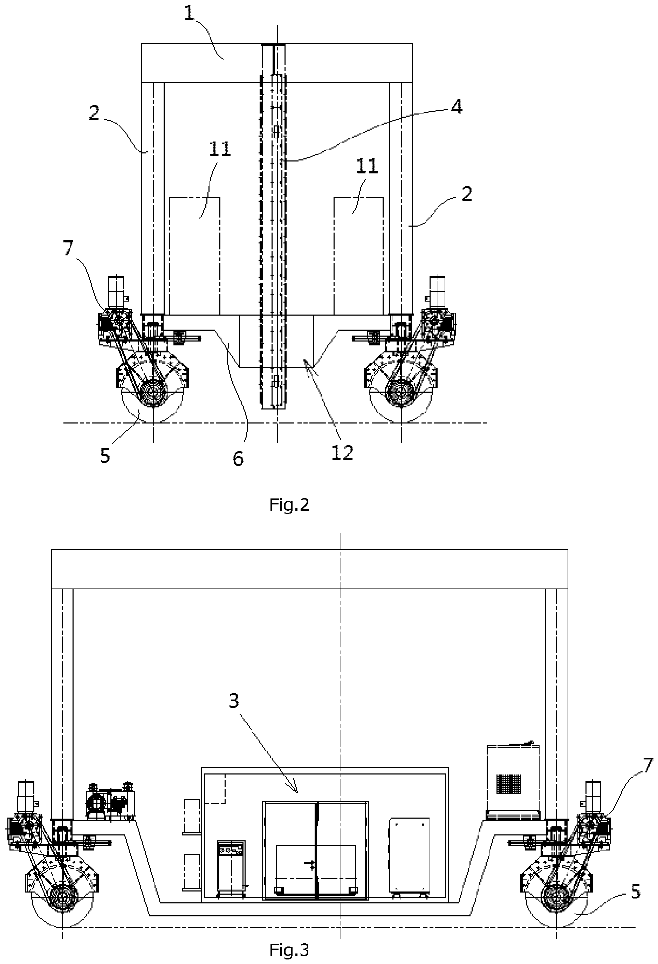

In combination with another view shown in FIG. 2, the wheeled travelling device comprises a wheel carrier 6, wheels 5 and a travelling drive mechanism for rotating the wheels 5. The wheel carrier 6 is connected with the lower end of the vertical beams 2 of the portal frame, and the wheels 5 and the travelling drive mechanism are mounted on the wheel carrier 6. The wheels 5 are rotatable and steerable with respect to the wheel carrier 6. The travelling drive mechanism can drive the wheels 5 to rotate about an axle to realize the travelling function of the wheeled travelling device. The wheels 5 can also steer with respect to the wheel carrier 6. The wheels 5 may take the form of wheels with tires, so as to apply to more forms of ground, such as a smooth cement site or a highway pavement.

As can be seen from FIG. 2, there may be two or more vertical beams 2 on opposite sides of the portal frame, so as to form a stable supporting structure. The inspection assembly comprises a radiation source 3 and a detection unit 4. The radiation source 3 is mounted on the wheeled travelling device. As can be seen from FIG. 1, the rays emitted by the radiation source 3 form a fan-shaped scanning surface (i.e., an angle range θ₁ radiated by the rays emitted from the radiation source 3 in FIG. 1) to scan the article 13 passing through the portal frame. The detection unit 4 may be mounted on the transverse beam 1 and/or the vertical beam 2 of the portal frame. The distribution position of the detection unit 4may be arranged based on the fan-shaped scanning surface. A scattering rays or transmission rays on the article is detected by the detection unit 4, so as to realize scanning imaging of the inside of the article.

In FIG. 2, the radiation source 3 and related devices may be contained in a box 8. In consideration of the height of the article 13 when the article 13 passes and the coverage of the fan-shaped scanning surface, the wheel carrier 6 is provided with a downwardly protruding frame structure 12, and the box 8 (including the radiation source 3) is mounted within the downwardly protruding frame structure 12. A lower ray edge of the fan-shaped scanning surface is not higher than a lower surface of the article 13 (for example, the angle between the lower ray of the fan-shaped scanning plane in FIG. 1 and the horizontal plane is a negative angleθ₂), so as to ensure more sufficient scanning and eliminate blind spots of scanning. In another embodiment, not forming part of the present invention, the radiation source 3 and the box 8 may also be mounted on the portal frame, and they are preferably disposed at a lower position.

Referring to FIG. 2, the wheel carrier 6 may be provided with at least two of the wheels 5.The wheels 5 are disposed symmetrically with respect to a center plane of the portal frame. The plurality of wheels 5 can achieve a greater carrying capacity, and the symmetrical arrangement can ensure the stability of the inspection system during travelling. The travelling drive mechanism can take many forms, including a motor driven by various types of energy sources (such as electric energy, solar energy, fossil energy and the like), and a transmission mechanism may be provided according to the transmission needs.

In FIG. 2, the travelling drive mechanism includes a plurality of motors 7, each of which drives one of the wheels 5correspondingly, thereby achieving good steering and driving performance. As can be seen from the drawing, the output shaft of the motor 7 can drive the corresponding wheel 5 to rotate about the rotating shaft by a belt or a chain. In another embodiment, each motor 7 can also drive one or more of the wheels 5 by a transmission mechanism to reduce the number of motors.

The space between the vertical beams can be determined according to the various devices mounted. The space between two vertical beams in FIG. 2 is smaller. Preferably, the inspection assembly is arranged in the outer space of the vertical beams. In the embodiment shown in FIG. 3, the space between two vertical beams is larger, which allows to provide other working devices and systems in this space, such as a generator, a hydraulic pump station and/or an electric control system 11. The generator can supply power to the inspection assembly and the wheeled travelling device so as to realize independent power supply and ensure long-term operation and long-distance transition of the movable article inspection system.

Considering that rays are harmful to the human body, the wheeled travelling device may be provided thereon with a remote control command transmission assembly which is electrically connected with the electric control system 11, and the operator can perform remote communications with the remote control command transmission assembly by means of the remote controller, so as to remotely control the wheeled travelling device and the inspection assembly.

In the operating mode, a braking mechanism may be provided on the wheeled travelling device, for holding the movable article inspection system at a preset inspection position. That is to say, the wheeled travelling device of the movable article inspection device is used only for the transition and stays in the inspection position. At this time, the article moves through the portal frame on its own to perform the active scanning inspection. In this operating mode, the inspection assembly operates very stably and isn't easily affected by the flatness of the site, which is different from the manner in which the gantry of a mobile gantry inspection system moves along a fixed track and makes the article be checked passively.

In another feasible operating mode, a route correction mechanism may be provided on the wheeled travelling device, which enable the movable article inspection system to travel along a preset track (such as a straight line or a curved line), so that the article which have no movement relative to the ground passively passes for scanning inspection.

Finally, it should be noted that: the above-mentioned embodiments are only used for explaining the technical solutions of the present disclosure instead of limiting the same; while the present disclosure has been described in detail with reference to the preferred embodiments, those skilled in the art should understand that: modifications can still be made to the embodiments of the present disclosure without departing from the scope of the present invention, which is solely defined by the appended claims.

## Claims

1. A movable article inspection system, comprising:
a portal frame, comprising:
a transverse beam (1) located at a top of the portal frame; and
vertical beams (2) located on opposite sides of the transverse beam (1) and connected with the transverse beam (1);
a wheeled travelling device provided at lower ends of the vertical beams (2), for moving the portal frame; and
a ray-based inspection assembly for carrying out an inspection of an article passing through the portal frame;
wherein the inspection assembly comprises:
a radiation source (3), for emitting rays to form a fan-shaped scanning surface so as to scan the article passing through the portal frame; and
a detection unit (4) mounted on the portal frame, for detecting the rays reflected or transmitted on the article;
wherein the wheeled travelling device comprises a wheel carrier (6), wheels (5) and a travelling drive mechanism, the wheel carrier (6) is connected with the lower end of the vertical beams (2) of the portal frame, **characterized in that**
the wheel carrier (6) is provided with a downwardly protruding frame structure (12), and the radiation source (3) is mounted within the downwardly protruding frame structure (12).

2. The movable article inspection system according to claim 1, wherein the travelling drive mechanism is configured to rotate the wheels (5); and
wherein the wheels (5) and the travelling drive mechanism are mounted on the wheel carrier (6), and the wheels (5) are rotatable and steerable with respect to the wheel carrier (6).

3. The movable article inspection system according to claim 2, wherein the wheel carrier (6) is provided with at least two of the wheels (5).

4. The movable article inspection system according to claim 2, wherein the travelling drive mechanism comprises a plurality of motors (7), each of which for driving one of the wheels (5) correspondingly; or each of the motors (7) for rotating one or more of the wheels (5) through a transmission mechanism.

5. The movable article inspection system according to claim 1, wherein the wheeled travelling device comprises a generator for supplying power to the inspection assembly and the wheeled travelling device.

6. The movable article inspection system according to claim 5, further comprising a remote controller and a remote control command transmission assembly, the remote controller for communicating with the remote control command transmission assembly so as to remotely control the wheeled travelling device or/and the inspection assembly.

7. The movable article inspection system according to claim 1, wherein a braking mechanism is provided on the wheeled travelling device, for holding the movable article inspection system at a preset inspection position.

8. The movable article inspection system according to claim 1, further comprising a route correction mechanism for enabling the wheeled travelling device to travel along a preset track.

## Patentansprüche

1. Bewegliches Artikelinspektionssystem, das Folgendes umfasst:
einen Portalrahmen, der Folgendes umfasst:
einen Querträger (1), der an der Oberseite des Portalrahmens angeordnet ist; und
vertikale Träger (2), die an entgegengesetzten Seiten des Querträgers (1) angeordnet sind und mit dem Querträger (1) verbunden sind;
eine mit Rädern versehene Bewegungsvorrichtung, die an unteren Enden der vertikalen Träger (2) zum Bewegen des Portalrahmens vorgesehen ist; und
eine Inspektionsanordnung auf Strahlenbasis zum Durchführen einer Inspektion eines Artikels, der den Portalrahmen passiert;
wobei die Inspektionsanordnung Folgendes umfasst:
eine Strahlungsquelle (3) zum Emittieren von Strahlung, um eine fächerförmige Abtastfläche zu bilden, um den Artikel, der den Portalrahmen passiert, abzutasten; und
eine Detektionseinheit (4), die zum Detektieren der Strahlung, die vom Artikel reflektiert wird oder den Artikel durchdringt, am Portalrahmen montiert ist;
wobei die mit Rädern versehene Bewegungsvorrichtung einen Radträger (6), Räder (5) und einen Bewegungsantriebsmechanismus umfasst, wobei der Radträger (6) mit dem unteren Ende der vertikalen Träger (2) des Portalrahmens verbunden ist, **dadurch gekennzeichnet, dass**
der Radträger (6) mit einer nach unten vorstehenden Rahmenstruktur (12) versehen ist, und dass die Strahlungsquelle (3) in der nach unten vorstehenden Rahmenstruktur (12) montiert ist.

2. Bewegliches Artikelinspektionssystem nach Anspruch 1, wobei der Bewegungsantriebsmechanismus konfiguriert ist, die Räder (5) zu drehen; und wobei die Räder (5) und der Bewegungsantriebsmechanismus am Radträger (6) montiert sind, und wobei die Räder (5) in Bezug auf den Radträger (6) drehbar und lenkbar sind.

3. Bewegliches Artikelinspektionssystem nach Anspruch 2, wobei der Radträger (6) mit wenigstens zwei der Räder (5) versehen ist.

4. Bewegliches Artikelinspektionssystem nach Anspruch 2, wobei der Bewegungsantriebsmechanismus mehrere Motoren (7) umfasst, wovon jeder zum Antreiben jeweils eines der Räder (5) vorgesehen ist; oder wobei jeder der Motoren (7) zum Drehen eines oder mehrerer Räder (5) durch einen Transmissionsmechanismus vorgesehen ist.

5. Bewegliches Artikelinspektionssystem nach Anspruch 1, wobei die mit Rädern versehene Bewegungsvorrichtung einen Generator zum Zuführen von Leistung zur Inspektionsanordnung und zu der mit Rädern versehenen Bewegungsanordnung umfasst.

6. Bewegliches Artikelinspektionssystem nach Anspruch 5, das ferner eine Fernsteuerung und eine Anordnung zum Übertragen eines Fernsteuerungsbefehls umfasst, wobei die Fernsteuerung zur Kommunikation mit der Anordnung zum Übertragen eines Fernsteuerungsbefehls dient, um die mit Rädern versehene Bewegungsvorrichtung oder/und die Inspektionsanordnung aus der Ferne zu steuern.

7. Bewegliches Artikelinspektionssystem nach Anspruch 1, wobei ein Bremsmechanismus an der mit Rädern versehenen Bewegungsvorrichtung vorgesehen ist, um das bewegliche Artikelinspektionssystem bei einer vorgeschriebenen Inspektionsposition zu halten.

8. Bewegliches Artikelinspektionssystem nach Anspruch 1, das ferner einen Fahrwegkorrekturmechanismus umfasst, damit sich die mit Rädern versehene Bewegungsvorrichtung längs einer vorgeschriebenen Spur bewegen kann.

## Revendications

1. Système d'inspection d'article mobile, comprenant :
un châssis formant portique, comprenant :
une poutre transversale (1) située à un sommet du châssis formant portique ; et
des poutres verticales (2) situées sur des côtés opposés de la poutre transversale (1) et connectées à la poutre transversale (1) ;
un dispositif de déplacement sur roues prévu à des extrémités inférieures des poutres verticales (2), destiné à déplacer le châssis formant portique ; et
un assemblage d'inspection à base de rayons destiné à exécuter une inspection d'un article passant à travers le châssis formant portique ;
dans lequel l'assemblage d'inspection comprend :
une source de rayonnement (3) destinée à émettre des rayons pour former une surface de balayage en forme d'éventail de manière à balayer l'article passant à travers le châssis formant portique ; et
une unité de détection (4) montée sur le châssis formant portique, destinée à détecter les rayons réfléchis ou transmis sur l'article ;
dans lequel le dispositif de déplacement sur roues comprend un chariot à roues (6), des roues (5) et un mécanisme d'entraînement de déplacement, le chariot à roues (6) est connecté à l'extrémité inférieure des poutres verticales (2) du châssis formant portique,
**caractérisé en ce que**
le chariot à roues (6) est doté d'une structure de châssis en projection vers le bas (12), et la source de rayonnement (3) est montée à l'intérieur de la structure de châssis en projection vers le bas (12).

2. Système d'inspection d'article mobile selon la revendication 1, dans lequel le mécanisme d'entraînement de déplacement est configuré pour mettre les roues (5) en rotation ; et
dans lequel les roues (5) et le mécanisme d'entraînement de déplacement sont montés sur le chariot à roues (6), et les roues (5) peuvent être mises en rotation et dirigées par rapport au chariot à roues (6).

3. Système d'inspection d'article mobile selon la revendication 2, dans lequel le chariot à roues (6) est doté d'au moins deux des roues (5).

4. Système d'inspection d'article mobile selon la revendication 2, dans lequel le mécanisme d'entraînement de déplacement comprend une pluralité de moteurs (7) dont chacun est destiné à entraîner une des roues (5) de manière correspondante ; ou chacun des moteurs (7) est destiné à mettre en rotation une ou plusieurs des roues (5) via un mécanisme de transmission.

5. Système d'inspection d'article mobile selon la revendication 1, dans lequel le mécanisme d'entraînement de déplacement sur roues comprend un générateur destiné à alimenter une puissance à l'assemblage d'inspection et au dispositif de déplacement sur roues.

6. Système d'inspection d'article mobile selon la revendication 5, comprenant en outre un contrôleur à distance et un assemblage de transmission d'ordre de commande à distance, le contrôleur à distance étant destiné à communiquer avec l'assemblage de transmission d'ordre de commande à distance de manière à commander à distance le dispositif de déplacement sur roues ou/et l'assemblage d'inspection.

7. Système d'inspection d'article mobile selon la revendication 1, dans lequel un mécanisme de freinage est prévu sur le dispositif de déplacement sur roues, destiné à maintenir le système d'inspection d'article mobile à une position inspection prédéfinie.

8. Système d'inspection d'article mobile selon la revendication 1, comprenant en route un mécanisme de correction d'itinéraire destiné à permettre dispositif de déplacement sur roues de se déplacer le long d'une piste prédéfinie.
